# EUROPEAN PATENT APPLICATION

(11) **EP 4 628 627 A1**
(43) Date of publication of application: **08.10.2025**
(21) Application number: 24756653.2
(22) Date of filing: 30.01.2024
(51) Int. Cl.: C23C 28/00, B32B 7/022, B32B 15/18, B32B 15/095, B32B 27/18, B32B 27/40

(54) **SURFACE-TREATED STEEL SHEET**

(30) Priority: 15.02.2023 JP 2023022002
(71) Applicant: JFE Steel Corporation, Tokyo 100-0011 (JP)
(72) Inventor: TSUCHIMOTO, Kazuaki, Tokyo 100-0011 (JP); MATSUDA, Takeshi, Tokyo 100-0011 (JP)
(74) Representative: Haseltine Lake Kempner LLP
(86) International application number: PCT/JP2024/002920
(87) International publication number: WO 2024/171802

(57) **Abstract**

Provided is a surface-treated steel sheet that has excellent post-working corrosion resistance and spot weldability without containing chromium in a surface-coating layer. The surface-treated steel sheet includes a zinc or zinc alloy coated or plated steel sheet that has microscopic roughness on a surface; an organic-inorganic composite coating that is chromium-free and formed on the surface of the zinc or zinc alloy coated or plated steel sheet; and a surface-coating layer that contains a polyurethane resin and is formed on the organic-inorganic composite coating. An average total thickness of the organic-inorganic composite coating and the surface-coating layer at convex portions of the zinc or zinc alloy coated or plated steel sheet is 0.10 µm or less. An average thickness of the surface-coating layer is 0.4 µm to 1.0 µm. A coating damage rate of the surface-coating layer is 20 % or less after a bending/unbending process is applied to the surface-treated steel sheet using a bead that has a leading end bend radius of 5 mm.

## Description

### TECHNICAL FIELD

The present disclosure relates to a surface-treated steel sheet that is ideal for use in automobiles, home appliances, and construction materials, and does not contain chromium, which has a high environmental impact, in the surface-coating layer.

### BACKGROUND

Zinc or zinc alloy coated or plated steel sheets are widely used in the fields of automobiles, home appliances, construction materials, and the like. Zinc or zinc alloy coated or plated steel sheets that are surface-treated to improve corrosion resistance by chromating using a coating solution mainly composed of chromic acid, dichromic acid, or salts thereof have conventionally been widely used. However, recently, global environmental issues have increased the demand for the use of zinc or zinc alloy coated or plated steel sheets subjected to chromate-free surface treatment ("chromate-free treated steel sheets"), and chromate-free treated steel sheets that have various improved properties have been proposed.

As another approach, when zinc or zinc alloy coated or plated steel sheets are applied to the production of automobile members, it has also been common practice not to form a surface-coating layer. In such a case, zinc or zinc alloy coated or plated steel sheets are press-formed into formed members, a plurality of formed members are assembled into a member by spot welding, bonding, or the like, and the member is subjected to chemical conversion treatment and subsequent electrodeposition coating to produce the automobile member.

Thus, the corrosion resistance of automobile members is secured by the chemical conversion layer formed by the chemical conversion treatment and the electrodeposition coating formed by the electrodeposition coating process. However, at joined portions of formed members, there may be portions where the electrodeposition coating does not wrap around sufficiently. For this reason, secondary materials such as sealers and waxes are used to supplement the corrosion resistance of the joined portions. These secondary materials are a factor in increasing automobile production costs, and therefore there is a strong need to reduce use of these secondary materials. Further, as a drastic measure to decrease production costs, efforts have been made to eliminate the chemical conversion treatment and the electrodeposition coating process.

Accordingly, for application to automobile members, research and development of surface-treated steel sheets in which an organic surface-coating layer is formed on the surface of a zinc or zinc alloy coated or plated steel sheet has been actively pursued (for examples, see Patent Literature (PTL) 1 and 2). Such surface-treated steel sheets need to have excellent post-working corrosion resistance and, at the same time, need to be assembled into a defined shape, and therefore spot weldability is required.

In PTL 1, a chromium-free galvannealed steel sheet is described that has a surface-treatment layer on at least one side of a galvannealed steel sheet, the surface-treatment layer containing a coating-forming component that contains an organosilicon compound obtained by reacting a plurality of silane coupling agents with a cationic polyurethane resin and an inhibitor component that contains phosphoric acid and magnesium phosphate.

In PTL 2, a surface-treated steel sheet is described that has a coating on at least one side of a zinc or zinc alloy coated or plated steel sheet, the coating containing a binder resin that is a water-soluble or water-dispersible water-based resin, electrically conductive particles, anticorrosive pigment, and at least one oxide particle selected from the group consisting of zirconia particles, titania particles, nickel oxide particles, and tin (IV) oxide particles.

### CITATION LIST

### Patent Literature

PTL 1: JP 2016-148109 A
PTL 2: JP 2016-194137 A

### SUMMARY

### (Technical Problem)

For surface-treated steel sheets consisting of an organic surface-coating layer formed on a surface of a zinc or zinc alloy coated or plated steel sheet, typically, the thicker the thickness of the surface-coating layer, the better the post-working corrosion resistance, but electrical conductivity is decreased, resulting in lower spot weldability. That is, post-working corrosion resistance and spot weldability are conflicting properties. Various developments have been made to balance post-working corrosion resistance and spot weldability, but with the recent increase in the level of requirements, further improvements are required.

In view of the above, it would be helpful to provide a surface-treated steel sheet that has both excellent post-working corrosion resistance and excellent spot weldability without containing chromium in a surface-coating layer.

### (Solution to Problem)

The inventors have conducted extensive studies into a method to achieve a high degree of both post-working corrosion resistance and spot weldability in a two-layer surface-treated steel sheet, in which a chromium-free organic-inorganic composite coating and a surface-coating layer containing polyurethane resin are formed on a zinc or zinc alloy coated or plated steel sheet, and have made the following discoveries. That is, while minimizing the coating weight of the organic-inorganic composite coating as required, a specific polyurethane resin that has excellent flexibility was used as the polyurethane resin included in the surface-coating layer. This allowed the total thickness of the organic-inorganic composite coating and the surface-coating layer to be made very thin in convex portions of a zinc or zinc alloy coated or plated steel sheet, securing spot weldability. Further, damage during working of the surface-coating layer could be suppressed and excellent post-working corrosion resistance could be obtained.

The present disclosure is made based on these discoveries, and primary features of the present disclosure are described below.
[1] A surface-treated steel sheet comprising:
   a zinc or zinc alloy coated or plated steel sheet that has microscopic roughness on a surface thereof;
   an organic-inorganic composite coating that is chromium-free and formed on the surface of the zinc or zinc alloy coated or plated steel sheet; and
   a surface-coating layer that contains a polyurethane resin and is formed on the organic-inorganic composite coating, wherein
   an average total thickness of the organic-inorganic composite coating and the surface-coating layer at convex portions of the zinc or zinc alloy coated or plated steel sheet is 0.10 µm or less,
   an average thickness of the surface-coating layer is 0.4 µm to 1.0 µm, and
   a coating damage rate of the surface-coating layer is 20 % or less after a bending/unbending process is applied to the surface-treated steel sheet using a bead that has a leading end bend radius of 5 mm.
[2] The surface-treated steel sheet according to [1], wherein the polyurethane resin has an elongation of 400 % or more and a maximum tensile stress of 1.0 MPa or more.
[3] The surface-treated steel sheet according to [1] or [2], wherein the polyurethane resin is a solvent-soluble resin.
[4] The surface-treated steel sheet according to any one of [1] to [3], wherein the surface-coating layer contains a total of 1 mass part to 50 mass parts of one or more anti-corrosion additives selected from the group consisting of silicon oxide, phosphoric acid compounds, molybdic acid compounds, and vanadium compounds per 100 mass parts of the polyurethane resin.
[5] The surface-treated steel sheet according to any one of [1] to [4], wherein the surface-coating layer contains 1 mass part to 30 mass parts of solid lubricant per 100 mass parts of the polyurethane resin.
[6] The surface-treated steel sheet according to any one of [1] to [5], wherein an average thickness of the organic-inorganic composite coating is 0.01 µm to 0.20 µm.

### (Advantageous Effect)

The surface-treated steel sheet of the present disclosure is excellent in both post-working corrosion resistance and spot weldability without containing chromium in a surface-coating layer.

### BRIEF DESCRIPTION OF THE DRAWINGS

In the accompanying drawings:
FIG. 1 is a schematic diagram of a cross-section structure of a surface-treated steel sheet according to an embodiment of the present disclosure;
FIG. 2 is a cross-section SEM image of a surface-treated steel sheet of Example No. 5;
FIG. 3 is a diagram illustrating a bending/unbending process in determining "coating damage rate" according to an embodiment of the present disclosure;
FIG. 4 is a diagram illustrating a cyclic corrosion test to evaluate post-working corrosion resistance in the tested examples;
FIG. 5 is a schematic diagram of a frictional coefficient measuring apparatus used to evaluate lubricity in the tested examples; and
FIG. 6 is a perspective diagram illustrating shape and dimensions of a bead used to evaluate lubricity in the tested examples.

### DETAILED DESCRIPTION

### [Surface-treated steel sheet]

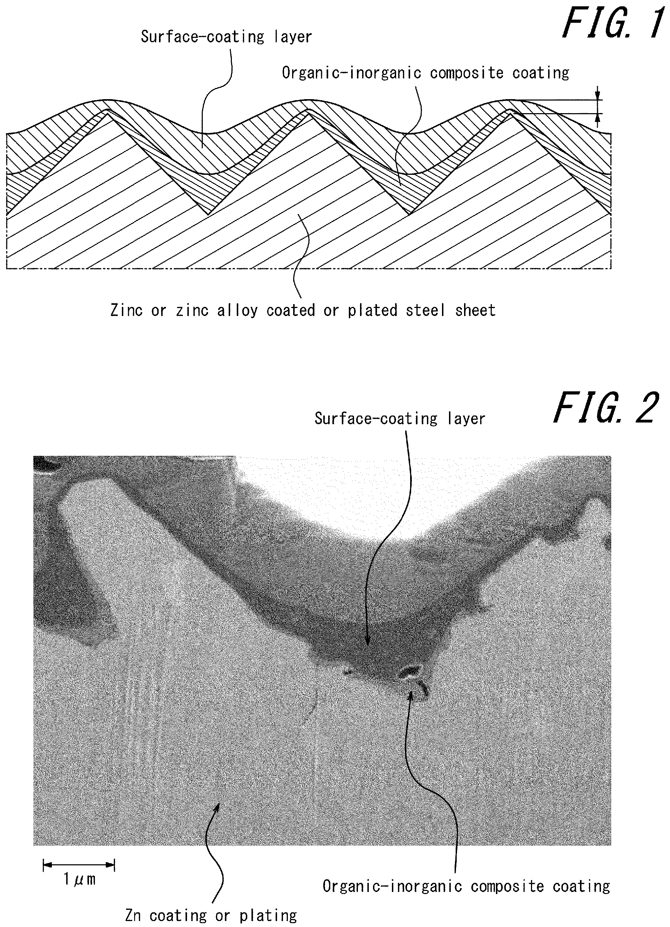

Referring to FIG. 1, a surface-treated steel sheet according to an embodiment of the present disclosure includes a zinc or zinc alloy coated or plated steel sheet, an organic-inorganic composite coating formed on a surface of the zinc or zinc alloy coated or plated steel sheet, and a surface-coating layer formed on the organic-inorganic composite coating. Hereinafter, "surface of the zinc or zinc alloy coated or plated steel sheet" means a surface of the zinc or zinc alloy coating or plating and means one or both sides of the zinc or zinc alloy coated or plated steel sheet.

### [[Zinc or zinc alloy coated or plated steel sheet]]

The zinc or zinc alloy coated or plated steel sheet may be any steel sheet on which any zinc or zinc alloy coating or plating is formed, and examples include a zinc coated or plated steel sheet, a Zn-Fe alloy coated or plated steel sheet, a Zn-Ni alloy coated or plated steel sheet, a Zn-Mn alloy coated or plated steel sheet, a Zn-Co alloy coated or plated steel sheet, a Zn-Cr alloy coated or plated steel sheet, a Zn-Al alloy coated or plated steel sheet, a Zn-Mg alloy coated or plated steel sheet, or a steel sheet with a coating or plating containing several of these alloying element. Further, a zinc or zinc alloy composite coated or plated steel sheet in which a small amount of different metal elements, metal oxides, polymers, or the like is dispersed in a zinc or zinc alloy coating or plating (for example, a Zn-SiO₂-dispersed coated or plated steel sheet) may be used as the zinc or zinc alloy coated or plated steel sheet.

Coating and plating methods are not particularly limited, and may be electroplating, electroless plating, hot-dip coating, PVD, CVD, or the like, and any appropriate method may be adopted. Further, annealing treatment, temper rolling treatment, surface conditioning treatment, and the like may be carried out after the formation of a zinc or zinc alloy coating or plating, as appropriate.

Typically, zinc or zinc alloy coated or plated steel sheets have microscopic roughness on their surfaces (that is, the surface of the zinc or zinc alloy coating or plating) that has an arithmetic mean roughness Ra of 0.5 µm or more and 1.5 µm or less. Here, the arithmetic mean roughness Ra is the arithmetic mean roughness obtained from a roughness curve measured on the surface of zinc or zinc alloy coated or plated steel sheet under a set of conditions including: cutoff value λc: 0.8 mm, cutoff value λs: 2.5 µm, and measuring distance: 2.5 mm, according to JIS B0601 (2001).

### [[Organic-inorganic composite coating]]

The organic-inorganic composite coating is a chromium-free coating formed on the surface of the zinc or zinc alloy coated or plated steel sheet. Referring to FIG. 1, the organic-inorganic composite coating preferably has a property that makes it less likely to conform to the surface roughness of the zinc or zinc alloy coated or plated steel sheet. That is, the thickness of the organic-inorganic composite coating at convex portions of the zinc or zinc alloy coated or plated steel sheet is preferably smaller than the thickness of the organic-inorganic composite coating at concave portions of the zinc or zinc alloy coated or plated steel sheet. As described below, this allows the total thickness of the organic-inorganic composite coating and the surface-coating layer at convex portions of the zinc or zinc alloy coated or plated steel sheet to be sufficiently small to secure spot weldability.

The average thickness of the organic-inorganic composite coating is preferably 0.01 µm or more. The average thickness is preferably 0.20 µm or less. When the average thickness of the organic-inorganic composite coating is too small, excellent corrosion resistance cannot be obtained. From this viewpoint, the average thickness of the organic-inorganic composite coating is preferably 0.01 µm or more. The average thickness is more preferably 0.05 µm or more. On the other hand, when the average thickness of the organic-inorganic composite coating is excessive, the total thickness of the organic-inorganic composite coating and the surface-coating layer at the convex portions of the zinc or zinc alloy coated or plated steel sheet cannot be decreased sufficiently to secure spot weldability. From this perspective, the average thickness of the organic-inorganic composite coating is preferably 0.20 µm or less.

The "average thickness of the organic-inorganic composite coating" is determined by the following method. A surface layer cross-section of the surface-treated steel sheet is observed in three fields of view at 5000× magnification using a scanning electron microscope (SEM), and the thickness of the organic-inorganic composite coating is measured at a total of 20 points at 1.0 µm intervals per field of view. The arithmetic mean value of the thicknesses at a total of 60 points in the three fields of view is taken as the "average thickness". Cross-sectioning methods are not particularly limited, and include, for example, focused ion beam (FIB) processing and the like.

The organic-inorganic composite coating preferably has excellent electrical conductivity for both post-working corrosion resistance and spot weldability. Specifically, the organic-inorganic composite coating is obtained by applying and drying a surface-treatment solution containing a water-soluble zirconium compound (a), tetraalkoxysilane (b), a compound having an epoxy group (c), a chelating agent (d), a vanadate compound (e), and a metal compound containing at least one selected from the group consisting of Ti, Al and Zn (f), in amounts satisfying the following conditions (I) to (V), and that has a pH of to 8 to 10, onto the surface of the zinc or zinc alloy coated or plated steel sheet.
(I) Mass ratio (a/b) of Zr equivalent mass of the water-soluble zirconium compound (a) to the tetraalkoxysilane (b) is 1.0 to 6.0
(II) Mass ratio (b/c) of the tetraalkoxysilane (b) to the compound having an epoxy group (c) is 0.1 to 1.6
(III) Mass ratio (b/d) of the tetraalkoxysilane (b) to the chelating agent (d) is 0.3 to 2.0
(IV) Mass ratio (e/d) of V equivalent mass of the vanadate compound (e) to the chelating agent (d) is 0.03 to 1.0
(V) Mass ratio (f/d) of total metal equivalent mass of the metal compound (f) to the chelating agent (d) is 0.05 to 0.8

Examples of the water-soluble zirconium compound (a) include zirconium nitrate, zirconium oxynitrate, zirconyl acetate, zirconyl sulfate, zirconium carbonate, zirconium ammonium carbonate, zirconium potassium carbonate, zirconium sodium carbonate, and zircon hydrofluoric acid, and one or more of these may be used.

Examples of the tetraalkoxysilane (b) include tetramethoxysilane, tetraethoxysilane, tetrapropoxysilane, and tetrabutoxysilane, and one or more of these may be used.

Examples of the compound (c) having an epoxy group include silane coupling agents that have an epoxy group, such as γ-glycidoxypropyltrimethoxysilane, γ-glycidoxypropylmethyldiethoxysilane, and γ-glycidoxypropyltriethoxysilane; ester compounds that have an epoxy group, such as adipic acid diglycidyl ester, phthalic acid diglycidyl ester, and terephthalic acid diglycidyl ester; ether compounds that have an epoxy group, such as sorbitol polyglycidyl ether, sorbitan polyglycidyl ether, polyglycerol polyglycidyl ether, pentaerythritol polyglycidyl ether, diglycerol polyglycidyl ether, glycerol polyglycidyl ether, trimethylpropane polyglycidyl ether, neopentyl glycol diglycidyl ether, ethylene glycol diglycidyl ether, polyethylene glycol diglycidyl ether, propylene glycol diglycidyl ether, and polypropylene glycol diglycidyl ether; and the like, and one or more of these may be used.

Examples of the chelating agent (d) include hydroxycarboxylic acids such as tartaric acid and malic acid; monocarboxylic acids; polycarboxylic acids such as dicarboxylic acids and tricarboxylic acids such as oxalic acid, malonic acid, succinic acid, citric acid, and adipic acid; aminocarboxylic acids such as glycine; phosphonic acids such as 1-hydroxymethane-1,1-diphosphonic acid; phosphonates; and the like, and one or more of these may be used.

Examples of the vanadate compound (e) include ammonium metavanadate and sodium metavanadate, and one or more of these may be used.

Examples of the metal compound containing at least one selected from the group consisting of Ti, Al, and Zn (f) include titanyl sulfate, titanyl nitrate, titanium nitrate, titanyl chloride, titanium chloride, titania sol, titanium oxide, potassium oxalate titanate, fluorotitanic acid, ammonium titanium fluoride, titanium lactate, titanium tetraisopropoxide, titanium acetylacetonate, diisopropyl titanium bisacetylacetone, aluminum oxide, aluminum hydroxide, aluminum sulfate, aluminum nitrate, aluminum phosphate, aluminum chloride, zinc carbonate, zinc oxide, zinc hydroxide, zinc sulfate, zinc nitrate, zinc chloride, zinc phosphate, sodium zincate, and potassium zincate, and at least one of these may be used.

The pH of the surface-treatment solution is in the range from 8 to 10. When the pH is less than 8, the storage stability of the surface-treatment solution, and corrosion resistance and adhesion of the organic-inorganic composite coating all decrease. When the pH is greater than 10, corrosion resistance and electrical conductivity decrease.

The mass ratio (a/b) of Zr equivalent mass of the water-soluble zirconium compound (a) to the tetraalkoxysilane (b) is in the range from 1.0 to 6.0. When the mass ratio (a/b) is less than 1.0, corrosion resistance is decreased, and when the mass ratio (a/b) exceeds 6.0, electrical conductivity is decreased.

The mass ratio (b/c) of the tetraalkoxysilane (b) to the compound having an epoxy group (c) is in the range from 0.1 to 1.6. When the mass ratio (b/c) is less than 0.1, corrosion resistance is decreased, and when exceeding 1.6, adhesion of the organic-inorganic composite coating is decreased.

The mass ratio (b/d) of the tetraalkoxysilane (b) to the chelating agent (d) is in the range from 0.3 to 2.0. When the mass ratio (b/d) is less than 0.3 or greater than 2.0, corrosion resistance is decreased.

The mass ratio (e/d) of V equivalent mass of the vanadate compound (e) to the chelating agent (d) is in the range from 0.03 to 1.0. When the mass ratio (e/d) is less than 0.03, corrosion resistance is decreased, and when exceeding 1.0, dissolution of the vanadate compound into the surface-treatment solution becomes difficult.

The mass ratio (f/d) of the total metal equivalent mass of the metal compound (f) to the chelating agent (d) is in the range from 0.05 to 0.8. When the mass ratio (f/d) is less than 0.05, corrosion resistance is decreased, and when exceeding 0.8, dissolution of the metal compound (f) into the surface-treatment agent becomes difficult.

### [[Surface-coating layer]]

The surface-coating layer is formed on the organic-inorganic composite coating, contains polyurethane resin and is chromium-free.

First, regarding both the organic-inorganic composite coating and the surface-coating layer, referring to FIG. 1, in the present embodiment, it is important that the average total thickness of the organic-inorganic composite coating and the surface treated coating on the convex portions of the zinc or zinc alloy coated or plated steel sheet is 0.10 µm or less. When the average of the total thickness exceeds 0.10 µm, excellent spot weldability cannot be obtained. When the average of the total thickness is 0.10 µm or less, a thin coating of the organic-inorganic composite coating and the surface-coating layer can be provided, and therefore excellent spot weldability is obtainable.

A lower limit of the average of the total thickness is not particularly limited. From the viewpoint of obtaining excellent post-working corrosion resistance, the average of the total thickness is preferably 0.02 µm or more.

The "average of the total thickness of the organic-inorganic composite coating and the surface-coating layer at the convex portions of the zinc or zinc alloy coated or plated steel sheet" is determined by the following method. A surface layer cross-section of the surface-treated steel sheet is observed in three fields of view at 10,000× magnification using an SEM, all convex portions in the three views are identified, the total thickness of the organic-inorganic composite coating and the surface-coating layer at all convex portions is determined, and the arithmetic mean value is taken as the "average thickness". Cross-sectioning methods are not particularly limited, and include, for example, FIB processing and the like.

It is important that the average thickness of the surface-coating layer is from 0.4 µm to 1.0 µm. When the average thickness of the surface-coating layer is less than 0.4 µm, the coating damage rate, described below, cannot be decreased to 20 % or less, and excellent post-working corrosion resistance cannot be obtained. On the other hand, when the average thickness of the surface-coating layer exceeds 1.0 µm, the average total thickness of the organic-inorganic composite coating and the surface-coating layer at the convex portions of the zinc or zinc alloy coated or plated steel sheet cannot be 0.10 µm or less, and excellent spot weldability cannot be obtained.

The "average thickness of the surface-coating layer" is determined by the following method. A surface layer cross-section of the surface-treated steel sheet is observed in three fields of view at 5000 × magnification using an SEM, and the thickness of the surface-coating layer is measured at a total of 20 points at 1.0 µm intervals per field of view. The arithmetic mean value of the thicknesses at a total of 60 points in the three fields of view is taken as the "average thickness". Cross-sectioning methods are not particularly limited, and include, for example, FIB processing and the like.

Further, it is important that the coating damage rate of the surface-coating layer is 20 % or less after a bending/unbending process is applied to the surface-treated steel sheet using a bead that has a leading end bend radius of 5 mm. When the coating damage rate exceeds 20 %, excellent post-working corrosion resistance cannot be obtained. The smaller the coating damage rate, the better, and therefore a lower limit is not particularly limited, the coating damage rate may be 0 % or more, and may be 5 % or more.

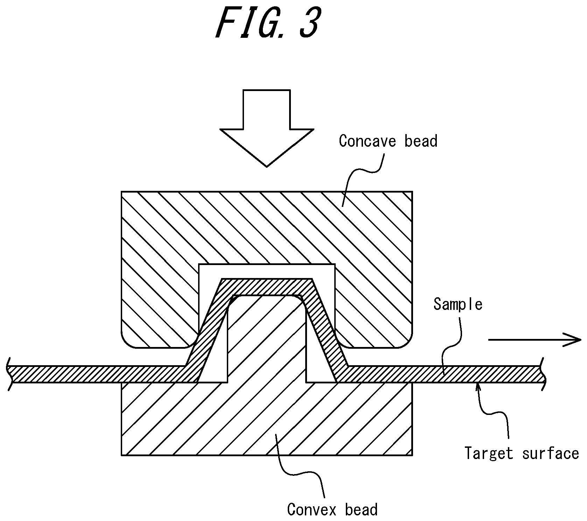

The "coating damage rate" is determined by the following method. As illustrated in FIG. 3, a bending/unbending draw bead test is carried out on a 68 mm × 350 mm test piece of the surface-treated steel sheet, which is pulled through horizontally at a withdrawal rate of 1 m/min while being held down with a load of 700 kgf and using convex and concave beads. Drawing is carried out with the application of anti-corrosion cleaning oil (Pretone R352L, produced by Sugimura Chemical Industrial Co., Ltd.), and the lead end of the convex bead has a bend radius of 5 mm. The surface of the surface-coating layer is then observed in three fields of view at 100× magnification using an SEM, coating-damaged portions are identified by image binarization of the reflected electron images, an area fraction of the coating-damaged portions is determined in each field of view, and the arithmetic mean value is taken as the "coating damage rate".

The polyurethane resin in the surface-coating layer and in the surface-treatment solution for forming the surface-coating layer preferably has an elongation of 400 % or more and a maximum tensile stress of 1.0 MPa or more. When the elongation is less than 400 %, the coating damage rate exceeds 20 % and excellent post-working corrosion resistance cannot be obtained. When the maximum tensile stress is less than 1.0 MPa, the strength of the surface-coating layer is low and the coating damage rate exceeds 20 %, and excellent post-working corrosion resistance cannot be obtained. Upper limits of the elongation and the maximum tensile stress are not particularly limited. The elongation of the polyurethane resin may be 2000 % or less and the maximum tensile stress may be 300 MPa or less.

The "elongation" and the "maximum tensile stress" of the polyurethane resin are measured using a tensile testing machine and in accordance with JIS K 7161 (2014). The elongation at fracture of the stress-strain curve obtained is the "elongation" and the maximum stress is the "maximum tensile stress".

The polyurethane resin contained in the surface-coating layer and in the surface-treatment solution for forming the surface-coating layer is preferably a solvent-soluble resin. There are two types of polyurethane resins: water-dispersion and solvent-soluble. The water-dispersion type of polyurethane resin conforms more easily to surface roughness of the zinc or zinc alloy coated or plated steel sheet. That is, the thickness of the surface-coating layer at the concave portions of the zinc or zinc alloy coated or plated steel sheet and the thickness of surface-coating layer at the convex portions of the zinc or zinc alloy coated or plated steel sheet tend towards equivalence. In this case, the average total thickness of the organic-inorganic composite coating and the surface-coating layer at the convex portions of the zinc or zinc alloy coated or plated steel sheet is not 0.10 µm or less, and spot weldability cannot be secured. In contrast, solvent-soluble polyurethane resins are dissolved in organic solvent in the surface-treatment solution, and are therefore unlikely to conform to surface roughness of the zinc or zinc alloy coated or plated steel sheet. That is, the thickness of the surface-coating layer at the convex portions of the zinc or zinc alloy coated or plated steel sheet is smaller than the thickness of the surface-coating layer at the concave portions of the zinc or zinc alloy coated or plated steel sheet. As a result, the average total thickness of the organic-inorganic composite coating and the surface-coating layer at the convex portions of the zinc or zinc alloy coated or plated steel sheet can be 0.10 µm or less to secure spot weldability.

As solvent-soluble polyurethane resins that have an elongation of 400 % or more and a maximum tensile stress of 1.0 MPa or more, known commercial products such as Burnock 16-416, Burnock 18-472, and Burnock DF-407, produced by DIC Corporation, and the like may be used.

The surface-coating layer and the surface-treatment solution for forming the surface-coating layer preferably contain one or more anti-corrosion additives selected from the group consisting of silicon oxide, phosphoric acid compounds, molybdic acid compounds, and vanadium compounds. This provides particularly excellent corrosion resistance.

As silicon oxide, colloidal silica and dry silica, which are microparticle silica, may be used. As colloidal silica, for example, Snowtex S, OS, C, NS, XS, and NXS (all trade names), produced by Nissan Chemical Corporation, may be used. Further, as dry silica, fumed silica and calcium-exchanged silica may be used. As fumed silica, Aerosil 130, NX130, 200, RX200, RY200, 300, 300CF, RX300, RY300 (all trade names), produced by Nippon Aerosil Co., Ltd., may be used. As calcium-exchanged silica, Shieldex C303 and Shieldex AC5 (both trade names), produced by W. R. Grace & Co., may be used. These silicas are known to contribute to the formation of dense and stable zinc corrosion products in a corrosion environment, and the dense formation of these corrosion products on the coated or plated surface inhibits progress of corrosion.

As phosphoric acid compounds, for example, phosphates may be used. Phosphates includes all types of salts, including single and double salts, and preferably have low solubility. Further, there is no limitation on the metal cations of the phosphate, which may be zinc phosphate, magnesium phosphate, calcium phosphate, aluminum phosphate, or any other metal cation. Further, there is no limitation on the phosphate ion skeleton or degree of condensation, and the phosphate may be a normal salt, a dihydrogen salt, a monohydrogen salt or a phosphite. Furthermore, normal salt here includes orthophosphates and all condensed phosphoric acids such as polyphosphates. Such phosphoric acid compounds inhibit corrosion reactions by forming a dense and low solubility protective coating through a complexing reaction with phosphate ions dissociated by hydrolysis from the zinc in the coated or plated metal that has been leached by corrosion.

As molybdic acid compounds, for example, molybdates may be used. Molybdates are not limited in skeleton or degree of condensation, and examples include ortho-molybdates, para-molybdates, and meta-molybdates. Further, all salts are included, including single and double salts, and an example of a double salt is phosphomolybdate. Molybdic acid compounds exhibit self-repairing properties due to a passivation effect. That is, the formation of dense oxides on the surface of the coating or plating together with dissolved oxygen in a corrosion environment seals the corrosion initiation point and inhibits corrosion reactions.

As vanadium compounds, for example, pentavalent and tetravalent vanadium compounds are applicable. In particular, from the viewpoint of corrosion resistance, tetravalent vanadium compounds are preferred.

The corrosion inhibitor additive content is preferably in a range of 1 mass part to 50 mass parts in total per 100 mass parts of the polyurethane resin in the surface-coating layer and per 100 mass parts of solid content of the polyurethane resin in the surface-treatment solution. When 1 mass part or more is used, the effect of improving post-working corrosion resistance may be sufficiently obtained. When 50 mass parts or less are used, the ratio of the polyurethane resin in the surface-coating layer is not decreased, and post-working corrosion resistance is not impaired.

The surface-coating layer and the surface-treatment solution for forming the surface-coating layer preferably contain, as required, a solid lubricant for the purpose of improving workability.

Examples of solid lubricants include the following, one or more of which may be used.
(1) Polyolefin wax, paraffin wax: for example, polyethylene wax, synthetic paraffin, natural paraffin, microcrystalline wax, and the like
(2) Fluoropolymer microparticles: for example, polyfluoroethylene resin, polyvinyl fluoride resin, polyvinylidene fluoride resin, and the like

Further, other examples include fatty acid amide compounds (for example, stearamide, palmitic acid amide, methylene bis stearoamide, ethylene bis stearoamide, oleic acid amide, ethyl acid amide, alkylene bis fatty acid amide, and the like), metal soaps (for example, calcium stearate, lead stearate, calcium laurate, calcium palmitate, and the like), metal sulfides (for example, molybdenum disulfide, tungsten disulfide, and the like), graphite, graphite fluoride, boron nitride, polyalkylene glycol, alkali metal sulfates, and the like, and one or more of these may be used.

The solid lubricant content is preferably in a range of 1 mass part to 30 mass parts per 100 mass parts of the polyurethane resin in the surface-coating layer and per 100 mass parts of solid content of the polyurethane resin in the surface-treatment solution. When 1 mass part or more is used, the effect of improved lubricity may be sufficiently obtained. When 30 mass parts or less are used, the ratio of the polyurethane resin in the surface-coating layer is not decreased, and post-working corrosion resistance is not impaired.

The surface-coating layer and the surface-treatment solution for forming the surface-coating layer may, as required, contain one or more of other oxide microparticles (for example, aluminum oxide, zirconium oxide, titanium oxide, cerium oxide, and the like) as a corrosion inhibitor, organic inhibitors (for example, hydrazine and derivatives thereof, thiol compounds, thiocarbamates, and the like), and the like. The corrosion inhibitor content is preferably in a range of 1 mass part to 10 mass parts per 100 mass parts of the polyurethane resin in the surface-coating layer and per 100 mass parts of solid content of the polyurethane resin in the surface-treatment solution. When 1 mass part or more is used, the effect of corrosion inhibition can be sufficiently obtained. When 10 mass parts or less are used, the ratio of the polyurethane resin in the surface-coating layer is not decreased, and post-working corrosion resistance is not impaired.

The surface-coating layer and the surface-treatment solution for forming the surface-coating layer may contain other additives as required, including one or more of organic color pigments (for example, condensed polycyclic organic pigments, phthalocyanine organic pigments, and the like), colored dyes, inorganic pigments, chelating agents (for example, thiols and the like), coupling agents (for example, silane coupling agents, titanium coupling agents, and the like), and the like. The content of these additives is preferably in a range of 1 mass part to 5 mass parts per 100 mass parts of the polyurethane resin in the surface-coating layer and per 100 mass parts of solid content of the polyurethane resin in the surface-treatment solution. When 1 mass part or more is used, the effect of the additive may be sufficiently obtained. When 5 mass parts or less are used, the ratio of the polyurethane resin in the surface-coating layer is not decreased, and post-working corrosion resistance is not impaired.

The surface-coating layer, as described above, contains the polyurethane resin and optionally includes the anti-corrosion additive, the solid lubricant, the corrosion inhibitor, and the other additives, and preferably consists of these components.

### [Method of producing surface-treated steel sheet]

The following describes a method of producing a surface-treated steel sheet according to an embodiment of the present disclosure.

First, a surface-treatment solution containing the water-soluble zirconium compound (a), the tetraalkoxysilane (b), the compound having an epoxy group (c), the chelating agent (d), the vanadate compound (e), and the metal compound containing at least one selected from the group consisting of Ti, Al, and Zn (f), in amounts that satisfy the conditions (I) to (V) described above, and having a pH from 8 to 10, is applied to the surface of the zinc or zinc alloy coated or plated steel sheet and then dried to form the organic-inorganic composite coating. The method for applying the surface-treatment solution may be any of a coating method (bar coating, roll coating, and the like), a spray method, and a dipping method (and roll squeezing). Examples of the heating and drying means include a drier, a hot air oven, a high frequency induction heater, an infrared furnace, and the like. Heating and drying is preferably carried out so that peak metal temperature is in a range from 60 °C to 200 °C.

Next, the surface-treatment solution containing the polyurethane resin, optionally including the anti-corrosion additive, the solid lubricant, the corrosion inhibitor, and the other additive, and preferably consisting of these components, is applied to the surface of the organic-inorganic composite coating and dried to form the surface-coating layer. The method for applying the surface-treatment solution may be any of a coating method (bar coating, roll coating, and the like), a spray method, and a dipping method (and roll squeezing). After coating the surface-treatment solution, heating and drying are carried out without water washing. Examples of the heating and drying means include a drier, a hot air oven, a high frequency induction heater, an infrared furnace, and the like. Heating and drying is preferably carried out so that peak metal temperature is in a range from 60 °C to 200 °C.

### EXAMPLES

As the base metal, a zinc or zinc alloy coated or plated steel sheet listed in Table 1 was used, with a cold-rolled steel sheet having a thickness of 0.8 mm as the substrate.

The surface-treatment solution indicated below was applied to the zinc or zinc alloy coated or plated steel sheet with a bar coater and heated with an induction heater so that the peak metal temperature was 140 °C to form the organic-inorganic composite coating. The average thickness of the organic-inorganic composite coating obtained by the method described above is listed in Table 5.

### [Surface-treatment solution]

Component (a): sodium zirconium carbonate 100 mass parts
Component (b): tetraethoxysilane 60 mass parts
Component (c): polyethylene glycol diglycidyl ether 138 mass parts
Component (d): 1-hydroxymethane-1,1-diphosphonic acid + tartaric acid 49 mass parts
Component (e): sodium metavanadate 17 mass parts
Component (f): ammonium titanium fluoride 3 mass parts

The pH of the surface-treatment solution was 8.4. The mass ratio (a/b) was 1.7, the mass ratio (b/c) was 0.4, the mass ratio (b/d) was 1.2, the mass ratio (e/d) was 0.3, and the mass ratio (f/d) was 0.06.

The anti-corrosion additives listed in Table 3 and the solid lubricants listed in Table 4 were added to the polyurethane resin listed in Table 2 in the amounts listed in Table 5 to form the surface-treatment solution, and the surface-treatment solution was applied to the surface of the organic-inorganic composite coating with a bar coater and heated with an induction heater so that the peak metal temperature was 140 °C, the surface-coating layer was formed and the surface-treated steel sheet was thereby obtained. Among the polyurethane resin products listed in Table 2, solvent-soluble types A1 to A3, A6, and A7 used methyl ethyl ketone as the diluting solvent in which the polyurethane resin was dissolved, while water-dispersion types A4 and A5 used water as the diluting solvent in which the polyurethane resin was dispersed. Further, the amounts of the anti-corrosion additives and the solid lubricants listed in Table 5 were the amounts added to 100 mass parts of solid content of the polyurethane resin in the surface-treatment solution, which is equal to the amount contained in 100 mass parts of the polyurethane resin in the surface-coating layer. Further, the average thickness of the surface-coating layer determined by the method previously described is listed in Table 5.

Further, the "average of total thickness of the organic-inorganic composite coating and the surface-coating layer at convex portions of the zinc or zinc alloy coated or plated steel sheet" and the "coating damage rate" were determined by the methods previously described and are listed in Table 5. Further, a cross-section SEM image of the surface-treated steel sheet of Example No. 5 is illustrated in FIG. 2, as representative of the Examples that conform to the present disclosure.

The obtained surface-treated steel sheets were subjected to the following performance evaluations, and the results are listed in Table 5.

### [Post-working corrosion resistance]

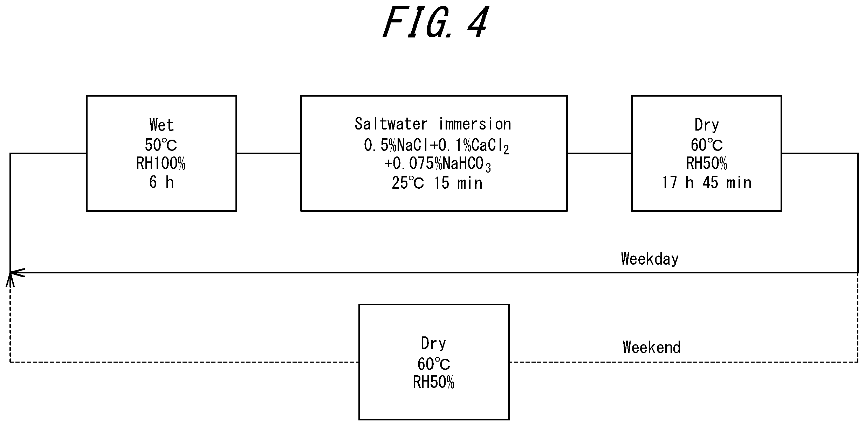

After the draw bead test to determine the coating damage rate, a sample was cut into 70 mm × 150 mm pieces and subjected to chemical conversion treatment with degreasing agent: FC-E6403 (40 °C, 120 s spray), surface conditioner: PL-X (room temperature, 20 s), and chemical conversion treatment agent: Pal Bond PB-L3065 (35 °C, 120 s), each produced by Nihon Parkerizing Co., Ltd., and then cationic electrodeposition paint (V-50, produced by Nippon Paint Co., Ltd.) was applied to achieve a film thickness of 20 µm. Each sample was then subjected to the cyclic corrosion test (CCT) based on SAE-J2334 and illustrated in FIG. 4 to determine an area fraction of white rust after 150 cycles and to evaluate post-working corrosion resistance using the following criteria.
Ⓞ : no white rust occurrence
O: white rust area fraction less than 20 %
× : white rust area fraction 20 % or more

### [Spot weldability]

For each sample, a continuous spot welding test was carried out under a set of conditions including electrode used: CF-type Cr-Cu electrode, electrode force: 150 kgf, current passage time: 10 cycles/60 Hz, and welding current: 8 kA, and spot weldability was evaluated using the following criteria.
O: consecutive number of welding spots 2000 or more
× : consecutive number of welding spots less than 2000

### [Lubricity]

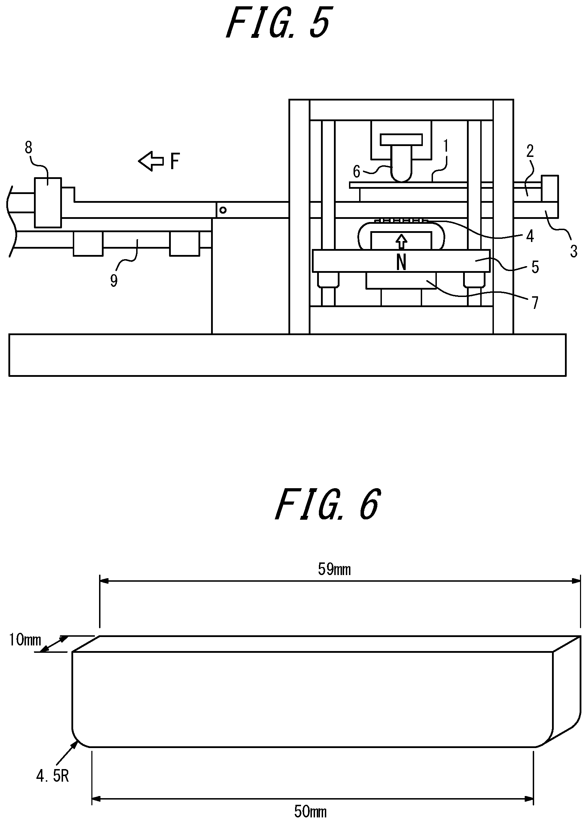

Frictional coefficient of each sample was measured for evaluation of press formability as described below. FIG. 5 schematically illustrates the frictional coefficient measuring apparatus used. In this apparatus, a sample 1 was fixed to a sample stand 2. The sample stand 2 is fixed to a top surface of a slide table 3, which can be moved horizontally. On the underside of the slide table 3 is a slide table support stand 5 that is vertically movable with rollers 4 in contact with the slide table 3. By pushing up the support stand 5, a pressing load N was generated on the sample 1 by a bead 6. A first load cell 7 for measuring the pressing load N is mounted on the slide table support stand 5. The slide table 3 was moved horizontally while the pushing force was applied. A second load cell 8 for measuring a sliding resistance force F generated in this process is mounted above a rail 9 at one end of the slide table 3. The test was carried out with the surface of the sample 1 coated with "Pretone R352L", an anti-corrosion cleaning oil produced by Sugimura Chemical Industrial Co., Ltd.

FIG. 6 is a perspective diagram illustrating shape and dimensions of the bead used. The lower surface of the bead 6 illustrated in FIG. 5 was pushed against and slides against the surface of the sample 1. The bead 6 illustrated in FIG. 6 has dimensions including width: 10 mm, length in the sliding direction: 59 mm, and bend radius at each lower end-side corner portion in the sliding direction: 4.5 mm. The lower surface of the bead pushed against the sample is a flat plane having width: 10 mm, and length in the sliding direction: 50 mm.

Measurement of frictional coefficient was carried out under the conditions described below. The bead illustrated in FIG. 6 was used, with a pressing load N: 400 kgf, and a sample withdrawal rate (horizontal movement speed of slide table 3): 20 cm/min. The frictional coefficient µ between the sample and the bead was calculated using the expression: µ = F/N. The smaller the frictional coefficient µ, the higher the lubricity and the better the evaluation of press formability. The evaluation criteria are as follows.
Ⓞ : frictional coefficient µ less than 0.22
O: frictional coefficient µ 0.22 or more and less than 0.28
× : frictional coefficient µ 0.28 or more

### [Table 1]

**Table 1**

| Ref. sign | Name | Coating weight (g/m²) | Surface roughness Ra (µm) |
|---|---|---|---|
| GA | Galvannealed steel sheet (Fe: 10 mass%) | 45 | 1.2 |
| EG | Electrogalvanized steel sheet | 60 | 0.9 |

### [Table 2]

**Table 2**

| Ref. sign | Name | Producer | Type | Elongation (%) | Maximum tensile stress (MPa) |
|---|---|---|---|---|---|
| A1 | Burnock 16-416 | DIC Corporation | Solvent-soluble | 800 | 30 |
| A2 | Burnock 18-472 | DIC Corporation | Solvent-soluble | 1600 | 5 |
| A3 | Burnock 16-411 | DIC Corporation | Solvent-soluble | 10 | 120 |
| A4 | Adeka Bontighter HUX561S | Adeka Corporation | Water-dispersion | 620 | 68 |
| A5 | Superflex 150HS | Daiichi Kogyo Seiyaku Co. | Water-dispersion | 480 | 45 |
| A6 | Burnock DF-402 | DIC Corporation | Solvent-soluble | 1600 | 0.5 |
| A7 | Burnock DF-407 | DIC Corporation | Solvent-soluble | 400 | 30 |

### [Table 3]

**Table 3**

| Type | Anticorrosive additive | Product name | Producer |
|---|---|---|---|
| 1 | Calcium ion-exchanged silica | Shieldex C303 | W.R. Grace & Co. |
| 2 | Fumed silica | Aerosil 200 | Nippon Aerosil Co., Ltd. |
| 3 | Aluminum dihydrogen tripolyphosphate | K-White G105 | Tayca Corporation |
| 4 | Disodium molybdic acid | Disodium molybdic acid | Fujifilm Wako Pure Chemical Corporation |
| 5 | Vanadyl sulfate | Vanadyl sulfate | Shinko Chemical Co., Ltd. |

### [Table 4]

**Table 4**

| Type | Solid lubricant | Product name | Producer |
|---|---|---|---|
| 1 | Polyethylene | Ceridust 3620 | Clariant AG |
| 2 | Polyethylene | Chemipearl W900 | Mitsui Chemicals, Inc. |
| 3 | Tetrafluoroethylene | KD-100CS | Kitamura Ltd. |

### [Table 5]

**Table 5**

| No. | Steel sheet type | Organic-inorganic composite coating | Surface-coating layer | | | | | | Coating evaluation | | Evaluation of performance | | | Classification |
|---|---|---|---|---|---|---|---|---|---|---|---|---|---|---|
| | | Average thickness (µm) | Resin | Anticorrosive additive | | Solid lubricant | | Average thickness (µm) | Average total thickness at convex portions (µm) | Coating damage rate (%) | Post-working corrosion resistance | Spot weldability | Lubricity | |
| | | | | Type | Amount | Type | Amount | | | | | | | |
| 1 | GA | 0.15 | A1 | - | - | - | - | 0.21 | 0.03 | 42 | × | ○ | ○ | Comparative Example |
| 2 | GA | 0.15 | A1 | - | - | - | - | 0.40 | 0.05 | 19 | ○ | ○ | ○ | Example |
| 3 | GA | 0.15 | A1 | 1 | 30 | - | - | 0.43 | 0.06 | 17 | Ⓞ | ○ | ○ | Example |
| 4 | GA | 0.15 | A1 | 2 | 30 | - | - | 0.53 | 0.05 | 15 | Ⓞ | ○ | ○ | Example |
| 5 | GA | 0.15 | A1 | 3 | 30 | 1 | 5 | 0.50 | 0.06 | 16 | Ⓞ | ○ | Ⓞ | Example |
| 6 | GA | 0.15 | A1 | 4 | 30 | 1 | 10 | 0.55 | 0.06 | 14 | Ⓞ | ○ | Ⓞ | Example |
| 7 | GA | 0.15 | A1 | 5 | 10 | 2 | 10 | 0.48 | 0.06 | 16 | Ⓞ | ○ | Ⓞ | Example |
| 8 | GA | 0.10 | A1 | 1 | 30 | 3 | 5 | 0.42 | 0.04 | 17 | Ⓞ | ○ | Ⓞ | Example |
| 9 | GA | 0.15 | A1 | - | - | - | - | 0.85 | 0.07 | 11 | ○ | ○ | ○ | Example |
| 10 | GA | 0.05 | A1 | 2 | 30 | 1 | 5 | 0.80 | 0.06 | 12 | Ⓞ | ○ | Ⓞ | Example |
| 11 | GA | 0.15 | A1 | 3 | 30 | 1 | 5 | 0.83 | 0.07 | 9 | Ⓞ | ○ | Ⓞ | Example |
| 12 | GA | 0.15 | A1 | - | - | - | - | 1.00 | 0.10 | 5 | ○ | ○ | ○ | Example |
| 13 | GA | 0.15 | A1 | - | - | - | - | 1.52 | 0.24 | ○ | ○ | × | ○ | Comparative Example |
| 14 | EG | 0.15 | A1 | 2 | 30 | 1 | 5 | 0.52 | 0.08 | 10 | Ⓞ | ○ | Ⓞ | Example |
| 15 | EG | 0.15 | A1 | 3 | 30 | 1 | 5 | 0.41 | 0.09 | 11 | Ⓞ | ○ | Ⓞ | Example |
| 16 | GA | 0.15 | A2 | - | - | - | - | 0.28 | 0.02 | 39 | × | ○ | ○ | Comparative Example |
| 17 | GA | 0.15 | A2 | - | - | - | - | 0.42 | 0.05 | 18 | ○ | ○ | ○ | Example |
| 18 | GA | 0.15 | A2 | 1 | 30 | 1 | 5 | 0.53 | 0.06 | 16 | Ⓞ | ○ | Ⓞ | Example |
| 19 | GA | 0.15 | A2 | 2 | 30 | 1 | 5 | 0.48 | 0.05 | 17 | Ⓞ | ○ | Ⓞ | Example |
| 20 | GA | 0.20 | A2 | 3 | 30 | 1 | 5 | 0.42 | 0.04 | 18 | Ⓞ | ○ | Ⓞ | Example |
| 21 | GA | 0.15 | A2 | 5 | 30 | 2 | 5 | 0.51 | 0.07 | 16 | Ⓞ | ○ | Ⓞ | Example |
| 22 | GA | 0.15 | A2 | 3 | 30 | 1 | 5 | 0.76 | 0.08 | 11 | Ⓞ | ○ | Ⓞ | Example |
| 23 | GA | 0.15 | A2 | - | - | - | - | 1.23 | 0.20 | 4 | ○ | × | ○ | Comparative Example |
| 24 | GA | 0.15 | A3 | - | - | - | - | 0.45 | 0.04 | 35 | × | ○ | ○ | Comparative Example |
| 25 | GA | 0.15 | A4 | 3 | 30 | 1 | 5 | 0.52 | 0.15 | 11 | Ⓞ | × | ⊚ | Comparative Example |
| 26 | GA | 0.15 | A5 | - | - | - | - | 0.55 | 0.18 | 13 | ○ | × | ○ | Comparative Example |
| 27 | GA | 0.15 | A6 | - | - | - | - | 0.48 | 0.06 | 25 | × | ○ | ○ | Comparative Example |
| 28 | GA | 0.15 | A7 | 3 | 30 | 1 | 5 | 0.56 | 0.06 | 19 | ○ | ○ | ○ | Example |

### INDUSTRIAL APPLICABILITY

The surface-treated steel sheet contains no chromium in the surface-coating layer and has excellent post-working corrosion resistance and spot weldability, and is therefore ideal for automobile, home appliance, and construction material applications.

### REFERENCE SIGNS LIST

- 1: sample
- 2: sample stand
- 3: slide table
- 4: rollers
- 5: slide table support stand
- 6: bead
- 7: first load cell
- 8: second load cell
- 9: rail
- N: pressing load
- F: sliding resistance force

## Claims

1. A surface-treated steel sheet comprising:
a zinc or zinc alloy coated or plated steel sheet that has microscopic roughness on a surface thereof;
an organic-inorganic composite coating that is chromium-free and formed on the surface of the zinc or zinc alloy coated or plated steel sheet; and
a surface-coating layer that contains a polyurethane resin and is formed on the organic-inorganic composite coating, wherein
an average total thickness of the organic-inorganic composite coating and the surface-coating layer at convex portions of the zinc or zinc alloy coated or plated steel sheet is 0.10 µm or less,
an average thickness of the surface-coating layer is 0.4 µm to 1.0 µm, and
a coating damage rate of the surface-coating layer is 20 % or less after a bending/unbending process is applied to the surface-treated steel sheet using a bead that has a leading end bend radius of 5 mm.

2. The surface-treated steel sheet according to claim 1, wherein the polyurethane resin has an elongation of 400 % or more and a maximum tensile stress of 1.0 MPa or more.

3. The surface-treated steel sheet according to claim 1 or 2, wherein the polyurethane resin is a solvent-soluble resin.

4. The surface-treated steel sheet according to any one of claims 1 to 3, wherein the surface-coating layer contains a total of 1 mass part to 50 mass parts of one or more anti-corrosion additives selected from the group consisting of silicon oxide, phosphoric acid compounds, molybdic acid compounds, and vanadium compounds per 100 mass parts of the polyurethane resin.

5. The surface-treated steel sheet according to any one of claims 1 to 4, wherein the surface-coating layer contains 1 mass part to 30 mass parts of solid lubricant per 100 mass parts of the polyurethane resin.

6. The surface-treated steel sheet according to any one of claims 1 to 5, wherein an average thickness of the organic-inorganic composite coating is 0.01 µm to 0.20 µm.
